Europäisches Patentamt

European Patent Office

Office européen des brevets

(19)

(11) Veröffentlichungsnummer : **0 019 855**
**B1**

(12) # EUROPÄISCHE PATENTSCHRIFT

(45) Veröffentlichungstag der Patentschrift :
09.03.83

(51) Int. Cl.³ : **F 16 L 55/02, B 60 T 17/00**

(21) Anmeldenummer : **80102846.5**

(22) Anmeldetag : **22.05.80**

(54) **Geräuschdämpfer für Ventileinrichtungen in Druckluftanlagen.**

(30) Priorität : **02.06.79 DE 2922677**

(43) Veröffentlichungstag der Anmeldung :
**10.12.80 Patentblatt 80/25**

(45) Bekanntmachung des Hinweises auf die Patenterteilung : **09.03.83 Patentblatt 83/10**

(84) Benannte Vertragsstaaten :
**AT DE FR GB IT NL SE**

(56) Entgegenhaltungen :
**DE A 2 253 995**
**DE A 2 403 084**
**DE A 2 427 071**
**DE A 2 910 209**
**DE B 1 181 015**
**DE U 7 533 846**
**US A 3 084 707**

(73) Patentinhaber : **WABCO Westinghouse Fahrzeugbremsen GmbH**
**Am Lindener Hafen 21 Postfach 91 12 80**
**D-3000 Hannover 91 (DE)**

(72) Erfinder : **Loof, Reinhard**
**Bussardhorst 18**
**D-3050 Wunstorf 1 (DE)**
Erfinder : **Deike, Karl-Heinz**
**Feldstrasse 17**
**D-3011 Pattensen 5 (DE)**
Erfinder : **König, Heinz-Werner**
**Luisenstrasse 6**
**D-3013 Barsinghausen (DE)**

(74) Vertreter : **Schrödter, Manfred**
**WABCO Westinghouse Fahrzeugbremsen GmbH Am
Lindener Hafen 21 Postfach 91 12 80**
**D-3000 Hannover 91 (DE)**

Geräuschdämpfer für Ventileinrichtungen in Druckluftanlagen

Die Erfindung betrifft Geräuschdämpfer für Ventileinrichtungen in Druckluftanlagen, insbesondere in Fahrzeugbremsanlagen, gemäß dem Oberbegriff des Anspruchs 1.

Geräuschdämpfer haben die Aufgabe, die Ablaßgeräusche, welche z. B. beim Ablassen von überschüssiger Druckluft aus Druckluft-Bremsanlagen entstehen, auf einen vom Gesetzgeber vorgeschriebenen Schallpegel (dB (A)) zu dämpfen. Dabei erfolgt der Einbau oder Anbau des Geräuschdämpfers in der Regel in bzw. an einer im Druckluft-Leitungssystem der Bremsanlage angeordnete Ventileinrichtung, welche funktionsbedingt in die Atmosphäre entlüftet. Insbesondere sind es Druckregler und Relaisventile, deren Aufgabe es ist, den Betriebsdruck in Druckluft-Bremsanlagen zu regeln, welche mit einem Geräuschdämpfer ausgerüstet sind, da die nach Erreichen eines bestimmten Behälterdruckes mitunter schlagartige Entlüftung in die Atmosphäre laute Geräusche verursacht.

Bekannt sind Geräuschdämpfer, welche zwecks Dämpfung des Luftstromes aus in Hohlkörpern angeordneten Widerstands- bzw. Dämpfungselementen bestehen, welche aufgrund ihrer Querlage zum Luftstrom die Wegführung dieses Luftstromes umlenken.

Ein derartiger Geräuschdämpfer für Druckluft-Bremsgeräte ist durch die DE-A-22 53 995 bekannt. Diese geräuschdämpfende Einrichtung besteht aus einem geschlossenen Hohlkörper mit aus elastischem Material bestehenden Dämpfungselementen und mit durch die Wandung des Hohlkörpers führenden Luftaustrittskanälen.

Geräuschdämpfer in dieser Bauart erzielen jedoch nur dann ausreichende Wirkung, wenn sie großvolumig ausgelegt sind. Verunreinigungen und Feuchtigkeit aus der Bremsanlage werden zwar durch eine Abscheideöffnung an der unteren Stirnwand des Hohlkörpers ausgeschieden, der von außen durch die seitlichen Luftaustrittskanäle dringende Schmutz kann jedoch den Geräuschdämpfer verstopfen. Ebenso verhält es sich bei allseitig offenen, aus Sintermaterial bestehenden Geräuschdämpfungseinrichtungen.

Geräuschdämpfer, deren Bauweise dem Auspuffprinzip nachvollzogen sind, d. h. welche aus einem Topf und darin in Reihe geschalteten Lochblechen mit zentralen Bohrungen bestehen, müssen zur Erzielung einer ausreichenden Geräuschdämpfung eine verhältnismäßig große Baulänge haben.

Durch die nicht vorveröffentlichte DE-A-29 10 209 ist ein Geräuschdämpfer der eingangs beschriebenen Art bekannt, welcher aufgrund der vorstehend beschriebenen Nachteile geschaffen wurde. Bei diesem Geräuschdämpfer können keine Verschmutzungen von außen eindringen und eine Verunreinigung durch Verschmutzungen und Feuchtigkeit in der Druckluftanlage sind auf ein Mindestmaß reduziert. Die Einbaumaße sind verhältnismäßig klein.

Für den Einsatz in Hochdruckanlagen (z. B. bei 18 bar) ist dieser Geräuschdämpfer jedoch nicht ohne weiteres geeignet, da eine vollständige Geräuschdämpfung nicht erzielt wird.

Der Erfindung liegt deshalb die Aufgabe zugrunde, einen Geräuschdämpfer der eingangs erwähnten Art zu schaffen, welcher auch für den Einsatz in Hochdruckanlagen geeignet ist.

Diese Aufgabe wird durch die im kennzeichnenden Teil des Anspruchs 1 aufgeführten Merkmale gelöst.

Durch die erfindungsgemäße Einrichtung wird bei Druckanstieg durch Stauung eine das Abblasgeräusch vordämpfende Wirkung erzielt, indem kurzfristig der freie Querschnitt verringert wird, was zur Folge hat, daß sich der Druck langsam abbaut und mehrfach umgelenkt in die nachgeschaltete zweite Dämpfungsstufe fließt. Der Geräuschdämpfer ist sowohl für Niederdruck als auch für Hochdruckanlagen verwendbar.

Durch die DE-A-24 03 084 ist zwar ein Geräuschdämpferglied für einen Flüssigkeitsmengenregler bekannt, über dessen Auslaßöffnungen eine elastische Prallplatte angeordnet ist, die bei Erreichen eines bestimmten Druckwertes durch die anströmende Flüssigkeit einen Teil der Auslaßöffnungen abdeckt. Diese bekannte Einrichtung gibt jedoch keine Anregung, bei einem speziellen Geräuschdämpfer der eingangs genannten Art für Druckluft-Bremsanlagen eine spezielle Anordnung für eine druckabhängige Drosselung der Einlaßöffnung vorzusehen.

Vorteilhafte Weiterbildungen und Ausgestaltungen der Erfindung sind den Unteransprüchen zu entnehmen.

Die Erfindung soll anhand von zwei Ausführungsbeispielen, die in den Zeichnungen dargestellt sind, näher erläutert werden.

Es zeigen :

Figur 1 eine Geräuschvordämpfung mittels einer federbelasteten Lochscheibe und

Figur 2 eine Geräuschdämpfung mittels einer elastischen Lochscheibe.

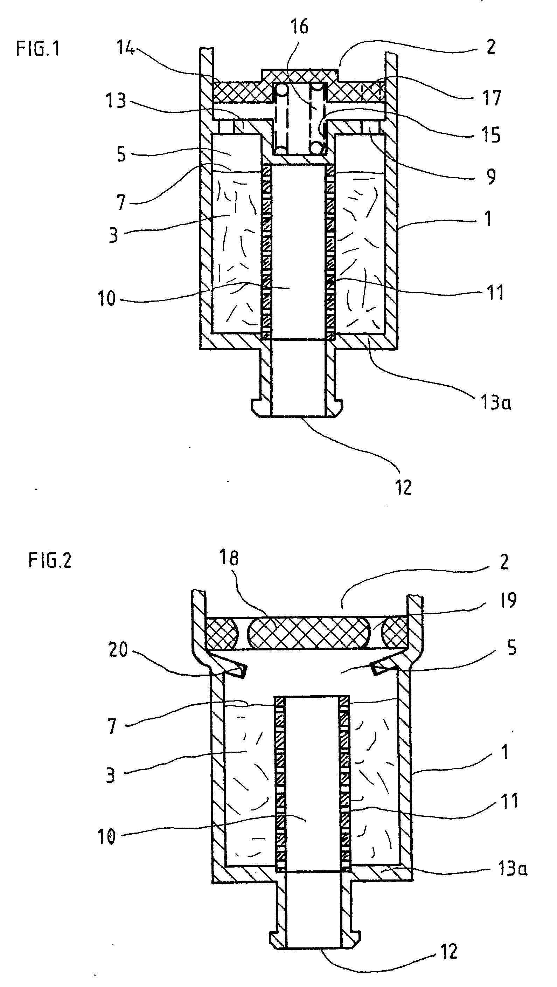

Der in Fig. 1 dargestellte Geräuschdämpfer besteht aus einem zylindrischen, oben und unten offenen Gehäuse 1, welches mit einem porösen, luftdurchlässigen Dämpfungsmaterial 3 gefüllt ist, oberhalb dessen sich ein Expansionsraum 5 befindet, wobei ein zentral durch das Dämpfungsmaterial 3 geführtes zylindrisches Lochblech 11 den Eingang 2 des Geräuschdämpfers über den Expansionsraum 5 mit dem am unteren Ende befindlichen Auslaß 12 verbindet.

Entsprechend dem in Fig. 1 dargestellten Ausführungsbeispiel ist vor der den Expansionsraum 5 begrenzenden und mit einer oder mehreren Einlaßöffnungen 9 versehenen ersten Gehäusestirnwand 13 eine starre Lochscheibe 14 im Einlaß 2 angeordnet, welche sich auf einer in einer Ausnehmung 15 dieser ersten Gehäusestirnwand 13 geführten Feder 16 abstützt. Die Lochscheibe 14 enthält mindestens ein oder mehrere Löcher 17, welche mit Einlaßöffnungen 9 der ersten Gehäusestirnwand 13 deckungsgleich sind, wobei die Anzahl der Löcher 17 geringer ist als die Anzahl der Einlaßöffnungen 9.

Beim Auftreffen von Druckluft auf die als Verschlußglied für die Einlaßöffnungen 9 dienende Lochscheibe 14 bewegt sich diese gegen die Kraft der Feder 16 auf die erste Gehäusestirnwand 13 zu und verschließt die Einlaßöffnungen 9 mehr oder weniger bis auf mindestens eine dieser Einlaßöffnungen 9, wodurch eine Drosselung bzw. Vordämpfung durch Verringerung des freien Querschnittes der in den Expansionsraum 5 einströmenden, auf die Prallfläche 7 des Dämpfungsmaterials 3 auftreffende Druckluft erzielt wird. Unter weiterer Dämpfung strömt die Druckluft teils durch das Dämpfungsmaterial 3, teils durch den freien Durchlaß 10 über Auslaß 12 der zweiten Gehäusestirnwand 13a ins Freie.

Nach Absinken des Staudruckes geht die Scheibe 14 wieder in ihre Ausgangsstellung zurück und gibt dabei wieder den vollen Querschnitt frei. Hierdurch wird erreicht, daß sich während der Leerlaufphase des Druckreglers kein wesentlich höherer Staudruck als bei einem Druckregler ohne Geräuschdämpfer ergibt.

Bei dem in Fig. 2 dargestellten Ausführungsbeispiel ist die erste Gehäusestirnwand als elastische Lochscheibe 18 ausgebildet, die als Verschlußglied wirkt. Die Funktion dieser mit radial angeordneten Löchern 19 versehenen Lochscheibe 18 erzielt ebenfalls eine vordämpfende Wirkung, indem bei einer Verformung der Lochscheibe 18 infolge Druckbeaufschlagung die Löcher 19 durch einen am Gehäuse 1 angeordneten Ringsteg 20 mehr oder weniger verschlossen werden. Die Querschnittsveränderung wird also durch das teilweise Abdecken der Bohrungen 19 in der Scheibe 18 durch den Gehäusesteg 20, bei einer entsprechenden Durchbiegung der Scheibe 18, infolge des Staudruckes erreicht. Der weitere Durchfluß durch den Geräuschdämpfer vollzieht sich wie bezüglich Fig. 1 beschrieben.

Ein zunächst großer Querschnitt wird durch das Abdecken eines Teiles des Querschnittes infolge des oberhalb der Scheibe 14 bzw. 18 entstehenden Staudruckes verringert und damit der Ablaßvorgang zeitlich gestreckt.

**Ansprüche**

1. Geräuschdämpfer für Ventileinrichtungen in Druckluftanlagen, insbesondere in Fahrzeugbremsanlagen zur Dämpfung der beim Abblasen der überschüssigen, über den Regeldruck geförderten Druckluft in die Atmosphäre entstehenden Geräusche, der folgende Merkmale umfaßt:

a) der Geräuschdämpfer besteht aus einem Gehäuse (1) mit einem mit mehreren Einlaßöffnungen (9, 19) versehenen Einlaß (2) an einer ersten Gehäusestirnwand (13, 18);

b) im Innenraum des Gehäuses (1) ist Dämpfungsmaterial (3) angeordnet;

c) an der ersten Gehäusestirnwand (13, 18) schließt sich ein im Gehäuse (1) liegender, vom Dämpfungsmaterial (3) begrenzter Expansionsraum (5) an, wobei der Expansionsraum (5) frei von Dämpfungsmaterial ist;

d) wenigstens ein, im wesentlichen in Längsrichtung des Gehäuses (1) das Dämpfungsmaterial (3) durchdringender, aus Lochblech (11) gebildeter Durchlaß (10) verbindet den Expansionsraum (5) direkt oder über die Öffnungen des Lochbleches (11) mit einem Auslaß (12) an einer zweiten Gehäusestirnwand (13a);

e) der Durchlaß (10) in dem Dämpfungsmaterial (3) ist derart angeordnet, daß das den Einlaßöffnungen (9) an der ersten Gehäusestirnwand (13, 18) zugewandte Durchlaßende in Längsrichtung des Gehäuses (1) nicht mit einer der Einlaßöffnungen (9, 19) fluchtet, gekennzeichnet durch folgende Merkmale:

f) ein Verschließglied (14, 20) zum Verschließen oder Drosseln der Einlaßöffnungen (9, 19) ist vorgesehen;

g) das Verschließglied (14) oder die die Einlaßöffnungen (19) aufweisende erste Gehäusestirnwand (18) sind bei Beaufschlagung mit dem Druck der anströmenden Luft in Längsrichtung des Gehäuses (1) und in Schließrichtung bezüglich der Einlaßöffnungen (9, 19) bewegbar.

2. Geräuschdämpfer nach Anspruch 1, gekennzeichnet durch folgende Merkmale:

a) das Verschließglied besteht aus einer mit mehreren Löchern (17) versehenen Lochscheibe (14), die der die Einlaßöffnungen (9) aufweisenden ersten Gehäusestirnwand (13) vorgeschaltet ist;

b) wenigstens eines der Löcher (17) der Lochscheibe (14) deckt sich nach einer Bewegung der Lochscheibe (14) in Schließrichtung mit wenigstens einen der Einlaßöffnungen (9).

3. Geräuschdämpfer nach Anspruch 2, dadurch gekennzeichnet, daß sich die Lochscheibe (14) gegen eine Feder (16) abstützt, die in einer Ausnehmung (15) der die Einlaßöffnungen (9) aufweisenden ersten Gehäusestirnwand (13) geführt ist.

4. Geräuschdämpfer nach Anspruch 1, gekennzeichnet durch folgende Merkmale:

a) die die Einlaßöffnungen (19) aufweisende erste Gehäusestirnwand ist als elastische, biegbare Scheibe (18) ausgebildet;

b) das Verschließglied ist als ein den Einlaßöffnungen (19) gegenüberliegender Vorsprung (20) der Gehäuseinnenwand ausgebildet.

5. Geräuschdämpfer nach Anspruch 4, dadurch gekennzeichnet, daß der Vorsprung der Gehäuseinnenwand als Ringsteg (20) ausgebildet ist.

**Claims**

1. Silencer for valve arrangements in compressed air installations, especially in brake installations for vehicles, for absorbing the noise resulting when releasing into the atmosphere the excess compressed air delivered at above the regulated pressure, which comprises the following features :

a) the silencer comprises a housing (1) having, at a first end wall (13, 18) of the housing, an inlet (2) provided with a plurality of inlet openings (9, 19) ;

b) absorbing material (3) is arranged in the internal space of the housing (1) ;

c) adjoining the first end wall (13, 18) of the housing there is an expansion space (5) lying in the housing (1) and bounded by the absorbing material (3), the expansion space (5) being free of absorbing material ;

d) at least one passage (10), penetrating the absorbing material (3) substantially in the longitudinal direction of the housing (1) and formed from perforated sheet metal (11), connects the expansion space (5) directly or via the openings in the perforated sheet metal (11) with an outlet (12) at a second end wall (13a) of the housing ;

e) the passage (10) in the absorbing material (3) is arranged in such a manner that the end of the passage facing the inlet openings (9) at the first end wall (13, 18) of the housing is not in alignment in the longitudinal direction of the housing (1) with one of the inlet openings (9, 19), characterised by the following features :

f) a closing member (14, 20) is provided for closing or throttling the inlet openings (9, 19) ;

g) the closing member (14) or the first end wall (18) of the housing having the inlet opening (19) is movable in response to the pressure of air flowing against it in the longitudinal direction of the housing (1) and in the closing direction relative to the inlet openings (9, 19).

2. Silencer according to claim 1, characterised by the following features :

a) the closing member consists of a perforated disc (14) which is provided with a plurality of holes (17) and is located upstream of the first end wall (13) of the housing having the inlet openings (9) ;

b) at least one of the holes (17) of the perforated disc (14) is aligned with at least one of the inlet openings (9) after the perforated disc (14) has moved in the closing direction.

3. Silencer according to claim 2, characterised in that the perforated disc (14) is biased by a spring (16) which is guided in a recess (15) in the first end wall (13) of the housing having the inlet openings (9).

4. Silencer according to claim 1, characterised by the following features :

a) the first end wall of the housing having the inlet openings (19) is constructed as a flexible, resilient disc (18) ;

b) the closing member is in the form of a protrusion (20), opposite the inlet openings (19), of the internal wall of the housing.

5. Silencer according to claim 4, characterised in that the protrusion of the internal wall of the housing is constructed as an annular projection.

**Revendications**

1. Silencieux pour dispositifs à soupapes dans des installations pneumatiques, et notamment dans des équipements de freinage de véhicules, pour l'amortissement des bruits produits par l'échappement à l'air libre de l'air comprimé en excès, débité au-delà de la pression de régulation, ledit silencieux présentant les particularités suivantes :

a) le silencieux est constitué par un corps (1) avec une entrée (2) munie de plusieurs trous d'admission (9, 19) sur une première paroi frontale (13, 18) du corps ;

b) un matériau amortisseur (3) est disposé à l'intérieur du corps (1) ;

c) le corps (1) contient un volume de détente (5), limité par la première paroi frontale (13, 18) et le matériau amortisseur (3), mais ne contenant pas de matériau amortisseur ;

d) un passage libre (10) au moins, formé par une tôle perforée (11) et traversant le matériau amortisseur (3) sensiblement suivant le grand axe du corps (1), relie le volume de détente (5) à une sortie (12) sur une seconde paroi frontale (13a) du corps, directement ou par les trous de la tôle perforée (11) ;

e) le passage (10) est disposé dans le matériau amortisseur (3) de façon que son extrémité en regard des trous d'admission (9) de la première paroi frontale (13, 18) du corps ne se trouve pas dans l'alignement d'un des trous d'admission (9, 19) suivant le grand axe du corps (1), et caractérisé en ce que :

f) un obturateur (14, 20) est prévu pour l'obturation ou l'étranglement des trous d'admission (9, 19) ;

g) l'obturateur (14) ou la première paroi frontale (18) du corps présentant les trous d'admission (19) est mobile suivant le grand axe du corps (1), dans le sens de fermeture des trous d'admission (9, 19), lors de l'application de la pression de l'air incident.

2. Silencieux selon revendication 1, caractérisé en ce que :

a) l'obturateur est constitué par un disque perforé (14), comportant plusieurs trous (17) et disposé en amont de la première paroi frontale (13) du corps présentant les trous d'admission (9) ;

b) un des trous (17) au moins du disque perforé (14) recouvre un des trous d'admission (9) au moins après un déplacement du disque perforé (14) dans le sens de fermeture.

3. Silencieux selon revendication 2, caractérisé en ce que le disque perforé (14) prend appui sur un ressort (16) qui est guidé dans un évidement (15) de la première paroi frontale (13) du corps présentant les trous d'admission (9).

4. Silencieux selon revendication 1, caractérisé en ce que :

a) la première paroi frontale du corps, présentant les trous d'admission (19), est réalisée sous forme d'un disque (18) élastique ;

b) l'obturateur est réalisé sous forme d'une saillie (20) de la paroi intérieure du corps, en regard des trous d'admission (19).

5. Silencieux selon revendication 4, caractérisé en ce que la saillie de la paroi intérieure du corps est réalisée sous forme d'une nervure annulaire (20).

FIG.1

FIG.2

0 019 855

1